# EUROPEAN PATENT APPLICATION

(11) **EP 1 037 464 A2**
(43) Date of publication of application: **20.09.2000**
(21) Application number: 00301510.4
(22) Date of filing: 25.02.2000
(51) Int. Cl.: H04N 7/167

(54) **A digital broadcast receiving apparatus and a digital broadcast transmitting apparatus with reduced power consumption**

(30) Priority: 15.03.1999 JP 6814299
(71) Applicant: MATSUSHITA ELECTRIC INDUSTRIAL CO., LTD., Kadoma-shi, Osaka 571 (JP)
(72) Inventor: Harada, Masaaki, Moriguchi-shi, Osaka-fu 570-0046 (JP); Osaka, Masataka, Katano-shi, Osaka-fu 576-0021 (JP); Kitamura, Tomohiko, Hirakata-shi Osaka-fu 573-0034 (JP); Kanzaki, Hideyuki, Takarazuka-shi, Hyogo-ken 655-0805 (JP)
(74) Representative: Crawford, Andrew Birkby

(57) **Abstract**

A digital broadcast receiving apparatus has the following construction. A receiving unit receives digital broadcast data broadcast by a digital broadcast transmitting apparatus. A control message detecting unit detects whether a control message such as an EMM (entitlement management message) is included in the data received by the receiving unit. A microcomputer executes control processing relating to the control message only when supplied with a clock signal. A mode controlling unit starts supplying the clock signal to the microcomputer when the control message is detected by the control message detecting unit, and suspends supply of the clock signal to the microcomputer when it has completed control processing relating to the control message.

## Description

This application is based on an application No. 11-068142 filed in Japan, the content of which is hereby incorporated by reference.

### BACKGROUND OF THE INVENTION

### Field of the Invention

The present invention relates to a digital broadcast receiving apparatus and a digital broadcast transmitting apparatus, and in particular to technology for reducing the power consumption of a digital broadcast receiving apparatus.

### Description of the Related Art

Recent years have seen the introduction of digital satellite broadcasts. Such broadcasts provide a plurality of programs through the use of multichannels, and also utilize techniques allowing programs to be viewed only by a licensed viewer (hereafter referred to as 'the subscriber').

The following method, disclosed in Japanese Laid-Open Patent Application No. 7-93621, is generally used in a related art digital broadcast communication system that allows programs to be viewed only by the subscriber. A digital broadcast transmitting apparatus transmits information such as a cipher key and decode control information, enabling program data transmitted as scrambled data to be viewed. This information is transmitted as data known as EMMs (entitlement management message) in a transport stream (TS). A digital broadcast receiving apparatus receives an EMM, and uses the decode control information, cipher key and the like to determine whether certain requirements are satisfied. If so, the digital broadcast receiving apparatus descrambles (decodes) the program data.

Here, a transport stream is the transmission unit used by the digital broadcast transmitting apparatus when transmitting data, composed of a sequence of transport stream packets, each having a length of, for example, 188 bytes. It conforms to the MPEG2 (Moving Picture Experts Group) standard, which stipulates multiplexing of a plurality of channels on a single band. For a more detailed description, see the report for ISO/IEC (International Organization for Standardization/International Electrotechnical Commission) standard 13818-1 (MPEG2 System).

An EMM is basically code, which is transmitted intermittently, for example three times every second, to control the decoder in the digital receiving apparatus. The EMM may be formed from a cipher key and decode control information, but it may also include information transmitted to realize various services and control various components in the digital broadcast receiving apparatus. Examples are electronic mail addressed to individual subscribers, and instructions that control accounting for pay-per-view programs by transmitting viewing record information recorded in the digital broadcast receiving apparatus to a broadcast center. The viewing record information is transmitted via a public network using a modem or similar device connected to the digital broadcast receiving apparatus.

The following explains the concept of a related art digital broadcast communication system, in which digital broadcasts can be viewed only by subscribers.

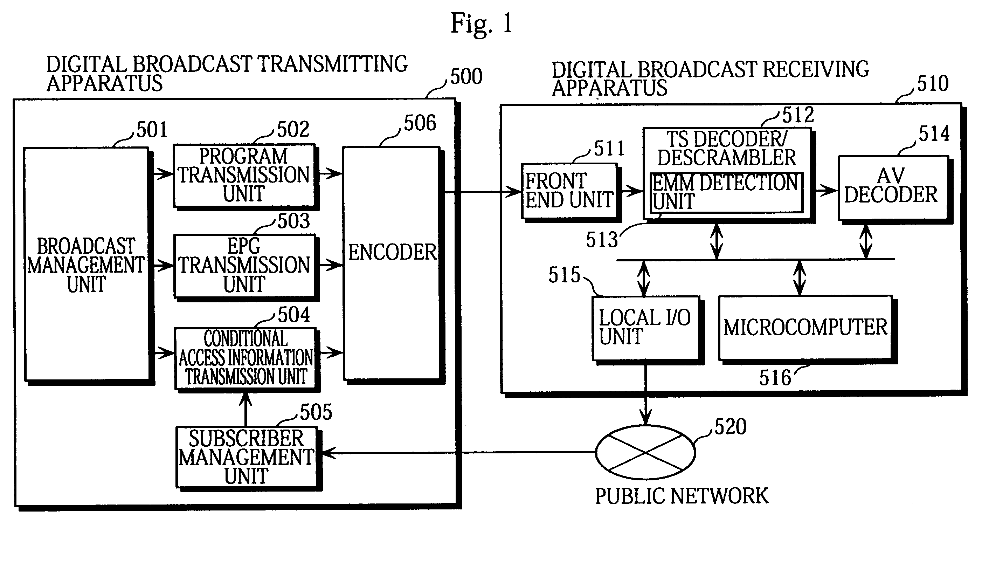

Fig. 1 is a block diagram of a related art digital broadcast communication system.

The conventional digital broadcast communication system shown in the drawing is constructed from a digital broadcast transmitting apparatus 500 and a digital broadcast receiving apparatus 510. Only one digital broadcast receiving apparatus is shown in the drawing, but a system typically includes a plurality of digital broadcast receiving apparatuses receiving programs and the like transmitted by the digital broadcast transmitting apparatus 500.

The digital broadcast transmitting apparatus 500 broadcasts digital broadcast program data and associated data, and includes a broadcast management unit 501, a program transmission unit 502, an EPG transmission unit 503, a conditional access information transmission unit 504, a subscriber management unit 505 and an encoder 506.

The broadcast management unit 501 performs overall control operations, such as specifying the content of broadcast data. The encoder 506 multiplexes various types of data into transport streams, which it then broadcasts.

The program transmission unit 502 transmits audio and video data for a broadcast program to the encoder 506. The EPG transmission unit 503 transmits data necessary for an electronic program guide (EPG) to the encoder 506. The conditional access information transmission unit 504 determines EMM content and forwards the EMM to the encoder unit 506.

The subscriber management unit 505 receives viewing record information transmitted via a public network from a digital broadcast receiving apparatus such as the digital broadcast receiving apparatus 510, and undertakes account processing and the like for each subscriber.

The digital broadcast receiving apparatus 510 receives digital broadcasts from the digital broadcast transmitting apparatus 500, and includes a front end unit 511, a TS decoder/descrambler 512, an EMM detection unit 513, an AV decoder 514, a local I/O unit 515 and a microcomputer 516.

The front end unit 511 receives digital broadcasts via an antenna, selects the necessary transport streams and transmits them to the TS decoder/descrambler 512.

The TS decoder/descrambler 512 divides a transport stream into transport stream packets, and extracts video data, audio data and other data such as EMMs according to filtering requirements set by the microcomputer 516. Since transport stream packets containing audio and video data are scrambled, the TS decoder/descrambler 512 descrambles these using a cipher key sent from the microcomputer 516. The TS decoder/descrambler 512 has a plurality of channels and can extract a plurality of pieces of data in parallel.

The EMM detection unit 513 corresponds to some of the plurality of channels in the TS decoder/descrambler 512, and detects and extracts EMMs.

The AV decoder 514 receives audio and video data output from the TS decoder/descrambler 512 and decompresses the received data under the control of the microcomputer 516, before outputting audio and video signals to an external monitor or similar.

The local I/O unit 515 is an interface with an external device such as a modem.

The microcomputer 516 is constructed from a single semiconductor chip having computational capability, which performs overall control of the digital broadcast receiving apparatus 510. The microcomputer 516 sets filtering requirements for the TS decoder/descrambler 512 and controls the AV decoder 514. When an EMM is detected by the EMM detection unit 513, the microcomputer 516 performs various control processing in response to the EMM content. For example, the microcomputer 516 performs processing controlling a modem to send viewing record information to the digital broadcast transmitting apparatus 500 via a public network 520 and, when the EMM content is a cipher key, performs processing for forwarding this key to the TS decoder/descrambler 512. Note that the digital broadcast transmitting apparatus 500 periodically changes the cipher key used to descramble the audio and video data, and then broadcasts information forming the basis for deriving a new cipher key as EMM content.

EMMs transmitted by the digital broadcast transmitting apparatus 500 include information for performing account control and the like, as described above. This means that the digital broadcast receiving apparatus 510 needs to receive EMMs and perform the corresponding processing, even if a user operation is received, placing it in a mode in which programs are not received (hereafter referred to as standby mode).

In standby mode, the digital receiving apparatus 510 is switched on, but is not receiving actual programs or outputting audio and video signals, so that the screen of the monitor that receives the audio-visual output is blank. The opposite mode, in which audio and video signals are output, is referred to as viewing mode. Switching between standby mode and viewing mode may be performed when the user presses a button located, for example, on the front panel of the digital broadcast receiving apparatus 510.

However, information such as EMMs for realizing various control operations and services is transmitted from the digital broadcast transmitting apparatus 500, regardless of whether programs are being viewed or not. Consequently, in order to process this information, a conventional digital broadcast receiving apparatus supplies a normal voltage and clock signal to the microcomputer 516 in both viewing mode and standby mode.

Recent increases in environmental awareness have, however, made it desirable to reduce the amount of power consumed by electronic products.

### SUMMARY OF THE INVENTION

An object of the present invention is to provide a digital broadcast receiving apparatus capable of reducing power consumption, or making it easier to reduce power consumption, in standby mode, assuming that information such as an EMM, whose corresponding processing must be performed even in standby mode, may be transmitted from a digital broadcast transmitting apparatus. A further object of the present invention is to provide a digital broadcast transmitting apparatus corresponding to the digital broadcast receiving apparatus.

In order to achieve the above objects, the digital broadcast receiving apparatus of the present invention receives broadcast data produced by multiplexing broadcast program data and control messages, and includes the following. A receiving unit receives the broadcast data. A control message detecting unit detects a control message included in the data received by the receiving unit. A control message processing unit is set in one of a first mode and a second mode, the second mode having a higher processing capability than the first mode. The control message processing unit performs control processing relating to the control message when in the second mode. A mode controlling unit sets the control message processing unit in the second mode once the control message is detected by the control message detecting unit.

Even if operation of the control message processing unit processing control messages is restricted by suspending the supply or lowering the frequency of a clock signal or suspending the supply of electric power until such a control message is received, the above structure enables processing relating to the control message to be performed by making the control message processing unit operational when a control message is received. This is achieved by starting supply of a clock signal, raising the frequency of the clock signal or starting the supply of electric power to the control message processing unit. As a result, power consumption can be reduced merely by the addition of a simple means for restricting the operation of the control processing unit until a control message is received.

Here, the first mode is a mode in which a clock signal is not supplied, and the second mode is a mode in which the clock signal is supplied. The mode controlling unit starts supplying the clock signal to the control message processing unit when the control message is detected by the control message detecting unit.

Even if the control message processing unit performing control message processing for control messages such as EMMs is made non-operational by suspending its clock supply until such a message is received, the above structure allows processing relating to a control message to be performed when a control message is received. As a result, power consumption can be reduced merely by the addition of a simple means for suspending operation of the control message processing unit until a control message is received.

The mode controlling unit suspends supply of the clock signal to the control message processing unit once the control message processing unit has completed execution of control processing relating to the control message.

This structure enables operation of the control message processing unit to be suspended once control processing related to the control message received by the control message processing unit has been completed. As a result, the power consumption of the control message processing unit is reduced.

The program data includes compressed audio and video data, and the digital broadcast receiving apparatus further includes the following. An audio-video extracting unit extracts audio and video data from the data received by the receiving unit. An audio-video decompressing unit decompresses the extracted audio and video data only when supplied with a clock signal. A viewing stop indication receiving unit receives a viewing stop indication via a user operation. Here, the mode controlling unit further suspends supply of a clock signal to the audio-video decompressing unit and the control message processing unit once a viewing stop indication has been received by the viewing stop indication receiving unit.

This structure enables supply of a clock signal to the control message processing unit processing control messages such as EMMs and a circuit for processing video and audio data to be suspended when a user operates a remote controller or the like to make a viewing stop indication. As a result, power consumption in non-viewing mode, that is standby mode, is reduced.

The digital broadcast receiving apparatus further includes a viewing start indication receiving unit for receiving a viewing start indication via a user operation. Here, the suspension of the clock signal by the mode controlling unit once control processing has been completed by the control message processing unit is limited to a period from when a viewing stop indication is received by the viewing stop indication receiving unit until a viewing start indication is received by the viewing start indication receiving unit. The mode controlling unit supplies a clock signal to the audio-visual decompressing unit and the control message processing unit from when a viewing start indication is received by the viewing start indication unit until a viewing stop indication is received by the viewing stop indication unit.

This structure enables supply of a clock signal to the control message processing unit processing control messages such as EMMs and a circuit for processing video and audio data to be started when a user operates a remote controller or the like to make a viewing start indication. This means that processing of audio and video data can be performed once the switch from standby mode to viewing mode has been completed, enabling the user to view the broadcast program.

The digital broadcast receiving apparatus includes a memory storing control programs for realizing control processing relating to the control message. Here, the control message processing unit is a microcomputer executing the control programs.

In this structure, when EMM-related control processing is realized by software, unnecessary power consumption can be prevented by stopping and starting a clock supply to the microcomputer executing the software.

The digital broadcast receiving apparatus includes a TS (transport stream) decoding unit and a channel controlling unit. The TS decoding unit has at least one channel used by the control message detecting unit for detecting control messages and a plurality of channels used by the audio-video extracting unit for extracting audio and video data. Each channel extracts one type of data complying with a predetermined requirement from the data received by the receiving unit. The channel controlling unit controls use of the channels used by the audio-video extracting unit so that use is prevented once a viewing stop indication has been received by the viewing stop indication receiving unit, and use is possible once a viewing start indication has been received by the viewing start indication receiving unit.

In this structure, the number of channels used by a TS decoding unit for extracting the necessary data from received data is varied as required, preventing unnecessary power consumption.

The microcomputer includes a CPU cache, and the mode controlling unit sets the CPU cache in OFF mode and does not supply a clock signal to the CPU cache, when a viewing stop indication is received by the viewing stop indication receiving unit, and sets the CPU cache in ON mode and starts supplying the clock signal to the CPU cache, when a viewing start indication is received by the viewing start indication receiving unit.

In this structure, the CPU cache is used in viewing mode, but not standby mode. Supply of a clock signal to the CPU cache can thus be suspended in standby mode, enabling power consumption to be reduced.

Here, the audio and video data are broadcast as scrambled data, and control messages include key information forming a basis for calculating a cipher key used for descrambling the scrambled audio and video data. The control programs include control processing to be executed by the microcomputer, the control processing calculating the cipher key based on the key information and supplying the cipher key to the audio-video extracting unit. The audio-video extracting unit uses the cipher key to descramble the scrambled audio and video data when extracting the audio and video data.

When the microcomputer must perform control processing such as using the content of a control message to calculate a cipher key used to descramble audio and video data so that viewing can occur, unnecessary power consumption can be avoided by using the above structure to stop and start supply of a clock signal so that it is supplied to the microcomputer within the required limits.

The control message detecting unit detects control messages only when supplied with a clock signal. The mode controlling unit starts supplying the clock signal to the control message detecting unit if a specified time has been reached, and suspends supply the clock signal to the control message detecting unit once control processing relating to a control message has been completed by the control message processing unit.

When the transmission time of a control message is stipulated, the above structure enables this transmission time to be stipulated as the specified time. Supply of a clock signal to the control message detecting unit starts when the specified time is reached, and ends when control processing relating to the control message is finished, enabling unnecessary power consumption to be avoided when a control message is not being broadcast.

Here, the specified time is a transmission time for a control message to be handled by the digital broadcast receiving apparatus, and differs from a transmission time for a control message to be handled by at least one other digital broadcast receiving apparatus.

In this structure, merely stipulating the transmission time of a control message as the specified time enables unnecessary power consumption to be avoided by the digital broadcast receiving apparatus during certain times, such as during the transmission of control messages to be handled by other digital broadcast receiving apparatuses, but not by itself.

The digital broadcast receiving apparatus includes an IC (integrated circuit) card reading unit for reading identification information recorded on an IC card. Here, the mode controlling unit decides the specified time in response to the identification information recorded on the IC card.

In this structure, the specified time is calculated based on identification information recorded in an IC card inserted into the apparatus, and digital broadcast receiving apparatuses are divided into groups based on this identification information. If control messages that should be handled by digital broadcast receiving apparatuses in each group have different transmission times, the control message detecting unit for detecting control messages in a particular digital broadcast receiving apparatus is activated when a message to be handled by that apparatus is transmitted. As a result, unnecessary power consumption can be avoided when control messages to be handled by the digital broadcast receiving apparatus are not being transmitted.

Here, the data received by the receiving unit further includes time information relating to the specified time, and the mode controlling unit decides the specified time according to the time information and the identification information.

In this structure, information specifying transmission times for control messages to be handled by each digital broadcast receiving apparatus are transmitted from the digital broadcast transmitting apparatus. Specified times at which control messages should be transmitted to each digital broadcast receiving apparatus are determined based on this information and information recorded in the IC card. This enables unnecessary power consumption to be avoided until the transmission time for a control message transmitted to the digital broadcast receiving apparatus.

Here, the first mode is a mode in which electric power is not supplied, and the second mode is a mode in which electric power is supplied. The mode controlling unit starts supplying electric power to the control message processing unit when a control message is detected by the control message detecting unit.

This structure enables control processing to be performed once a control message such as an EMM is received, even if the supply of electric power to the control message detecting unit performing control message processing is suspended until a control message is received, suspending operation of the control message processing unit. As a result, power consumption can be easily reduced until a control message is received.

Here, the digital broadcast receiving apparatus can be connected to peripheral devices, and control messages are information controlling a peripheral device. The first mode is a mode in which a clock signal is not received, and the second mode is a mode in which the clock signal is received. When in the second mode, the control message processing unit performs control processing of the peripheral device in response to a control message. The mode controlling unit starts supplying the clock signal to the control message processing unit and electric power to the peripheral device, when the control message has been detected by the control message detecting unit, and suspends supply of the clock signal to the control message processing unit and electric power to the peripheral device, once control processing relating to the control message has been completed by the control message processing unit.

When a control message such as an EMM instructing a modem to transmit viewing records to a broadcast center is received, power is supplied to peripheral devices such as a modem only when required, reducing power consumption of the whole digital broadcast reception system, including the peripheral devices.

The digital broadcast receiving apparatus further includes a memory storing control programs executed by a microcomputer using a multitasking function so that processing for control programs relating to control messages is treated as a separate task from other types of processing. Here, the first mode is a mode in which the clock signal is supplied at a first frequency, and the second mode is a mode in which the clock signal is supplied at a second frequency higher than the first frequency. The control message processing unit is the microcomputer executing the control programs, and the mode controlling unit supplies a clock signal to the microcomputer at the second frequency once a control message is detected by the control message detecting unit, and supplies a clock signal to the microcomputer at the first frequency once control processing relating to the control message has been completed by the microcomputer.

When a microcomputer executes tasks such as processing of user operations made via a remote controller or similar, and tasks for control message processing under the control of a multitasking OS, the tasks for control message processing are left in a waiting state until a control message is received, reducing the execution rate, and thus the power consumption, of the microcomputer by a corresponding amount.

Here, the mode controlling unit sets the control message processing unit in the first mode once control processing relating to the control message has been completed by the control message processing unit.

In this structure, operation of the control message processing unit can be restricted once processing related to a control message has been completed, reducing the power consumption of the control message processing unit.

A digital broadcast transmitting apparatus transmits data including control messages, using a digital broadcast format, to a plurality of digital broadcast, receiving apparatuses divided into a plurality of groups. The digital broadcast transmitting apparatus includes the following. A control message allocating unit allocates each of a plurality of control messages to one of the plurality of groups, the group including digital broadcast receiving apparatuses that should control processing relating to the control message. A control message transmitting unit for transmitting, at different times, control messages allocated to different groups by the control message allocating unit. A time information transmitting unit for transmitting time information showing times at which the control message transmitting unit will transmit control messages for each group, the time information being transmitted prior to transmission of the control messages.

In this structure, digital broadcast receiving apparatuses receive digital broadcasts from a digital broadcast transmitting apparatus, and each digital broadcast receiving apparatus in each group can specify transmission times for control messages to be handled by itself by referring to time information and suspend the circuit that detects control messages and the like until such a time is reached. This enables power consumption to be reduced.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:
Fig. 1 is a block diagram of a digital broadcast communication system in the related art;
Fig. 2 is a block diagram of a digital broadcast communication system in a first embodiment;
Fig. 3 is a block diagram of a TS decoder/descrambler 120, including an EMM detection unit 112;
Fig. 4 shows the data construction of a transport stream packet;
Fig. 5 is a flowchart showing processing for switching to standby mode;
Fig. 6 is a flowchart showing EMM processing performed by a digital broadcast receiving apparatus 110 when an EMM is detected by the EMM detection unit 112;
Fig. 7 is a flowchart showing processing for switching to viewing mode;
Fig. 8 is a block diagram of a digital broadcast communication system in a second embodiment; and
Fig. 9 is a flowchart showing timer processing executed by a clock control unit 217 when an indication for setting a time in a timer 219 is received from a microcomputer 218.

### DESCRIPTION OF THE PREFERRED EMBODIMENTS

The following is an explanation of the embodiments of the present invention, with reference to the drawings.

### First Embodiment

The following is an explanation of a digital broadcast communication system in the first embodiment of the present invention.

### Structure

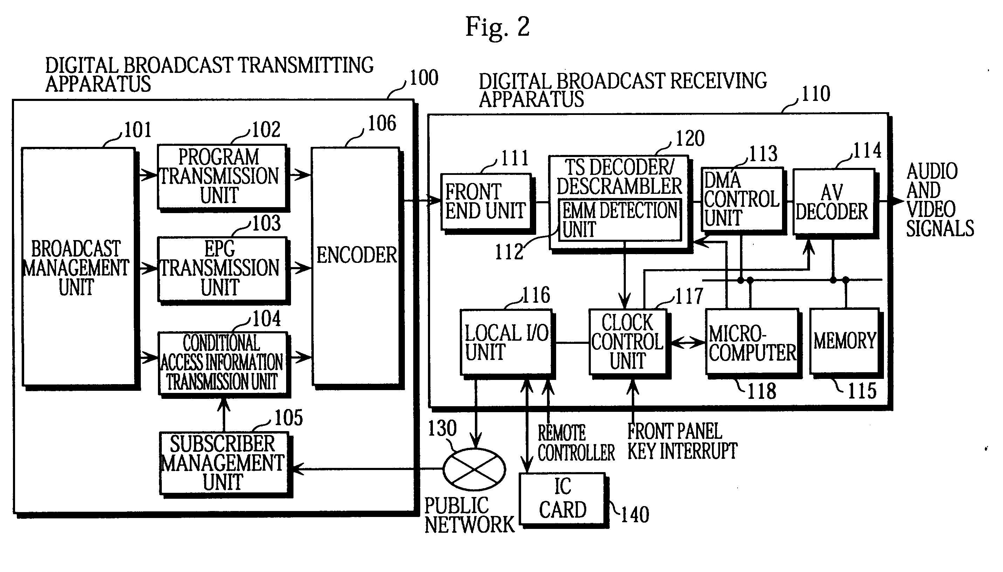

Fig. 2 is a block diagram of a digital broadcast communication system in the first embodiment. The digital broadcast communication system shown in the drawing is formed from a digital broadcast transmitting apparatus 100 and a digital broadcast receiving apparatus 110. Only one digital broadcast receiving apparatus 110 is shown in the drawing, but a system typically includes a plurality of digital broadcast receiving apparatuses receiving programs and the like transmitted by the digital broadcast transmitting apparatus 100.

The digital broadcast transmitting apparatus 100 broadcasts digital broadcast program data and associated data in the same way as a conventional digital broadcast transmitting apparatus, and includes a broadcast management unit 101, a program transmission unit 102, an EPG transmission unit 103, a conditional access information transmission unit 104, a subscriber management unit 105 and an encoder 106.

The broadcast management unit 101 performs overall control operations for the digital broadcast transmitting apparatus 100, such as determining program organization, broadcast content, and broadcast scheduling.

The program transmission unit 102 transmits audio and video data for a broadcast program to the encoder 106. The EPG transmission unit 103 transmits data necessary for an electronic program guide (EPG) to the encoder 106.

Upon receiving an indication from the transmission management unit 101, the conditional access information transmission unit 104 controls EMM transmission, determining the content of an EMM and transmitting the EMM to the encoder unit 106. These operations are performed, for example, with reference to subscriber information managed by the subscriber management unit 105. The conditional access information transmission unit 104 periodically changes information forming the basis for a cipher key (hereafter referred to as key information) used to decrypt the scrambled audio and video data for a program, and transmits the changed information. The conditional access information transmission unit 104 also transmits electronic mail to individual subscribers as EMM content, if required. The conditional access information transmission unit 104 also periodically transmits instructions as EMM content. These instructions enable subscriber accounts to be controlled when a pay-per-view program is viewed, by indicating that viewing record information recorded in the digital broadcast receiving apparatus is to be transmitted to a broadcast center via a public network 130 using a modem or the like.

The subscriber management unit 105 manages subscriber information, receives viewing record information transmitted from a digital broadcast receiving apparatus such as the digital broadcast receiving apparatus 110 via the public network 130, and undertakes account processing and the like for each subscriber.

The encoder 106 multiplexes the various types of data transmitted from the program transmission unit 102, the EPG transmission unit 103 and the conditional access information transmission unit 104 into transport streams, which it then modulates and transmits. Audio and video data are compressed according to MPEG format and scrambled, before being multiplexed by the encoder 106.

The digital broadcast receiving apparatus 110 receives digital broadcasts from the digital broadcast transmitting apparatus 100, and includes a front end unit 111, a TS decoder/descrambler 120, an EMM detection unit 112, a DMA control unit 113, an AV decoder 114, a memory 115, a local I/O unit 116, a clock control unit 117 and a microcomputer 118. The digital broadcast receiving apparatus 110 is connected to the public network 130 and allows an IC (integrated circuit) card 140 to be loaded.

The front end unit 111 receives a digital broadcast via an antenna, performs demodulating and error correction, and transmits a transport stream to the TS decoder/descrambler 120.

The TS decoder/descrambler 120 divides the transport stream into transport stream packets, and extracts video data, audio data and other data such as EMMs according to filtering requirements set by the microcomputer 118. Moreover, since transport stream packets containing audio and video data have been scrambled, the TS decoder/descrambler 120 descrambles these using a cipher key sent from the microcomputer 118. The TS decoder/descrambler 120 has fifty-two channels and can extract a plurality of pieces of data in parallel.

The EMM detection unit 112 corresponds to four channels in the TS decoder/descrambler 512, and detects and extracts EMMs. A detailed description of the TS decoder/descrambler 120 and the EMM detection unit 112 is given later in this specification.

The DMA (direct memory access) control unit 113 transfers data extracted by the TS decoder/descrambler 120 including the EMM detection unit 112, to the memory 115, bypassing the microcomputer 118. This enables EMMs detected by the EMM detection unit 112 to be forwarded to the memory 115.

The AV decoder 114 is a processor that receives audio and video data, output from the TS decoder/descrambler 120 and then stored in the memory 115, and decodes (decompresses) the received data, before outputting audio and video signals to an external monitor or similar. These operations take place under the control of the microcomputer 118.

The memory 115 stores various program groups for execution by the microcomputer 118, and audio data, video data, and other data such as EMMs extracted by the TS decoder/descrambler 120.

The local I/O unit 116 is an interface with a modem or other such external device, a remote controller, or the IC card 140. The IC card 140 includes a flash memory in which an ID and other information are recorded. A user can view digital broadcasts by inserting the ID card 140 in the digital broadcast receiving apparatus 110. Viewing record information is recorded in the IC 140 under the control of the microcomputer 118.

Upon receiving interrupts from the local I/O unit 116, key input interrupts from the front panel, indications from the microcomputer 118 and EMM detection reports from the EMM detection unit 112, the clock control unit 117 notifies the microcomputer 118 and supplies a clock to the AV decoder 114 and the microcomputer 118. In other words, the clock control unit 117 controls whether a clock is provided or not. The clock control unit 117 also holds mode information showing whether the current mode is standby or viewing mode. Here, the clock is a clock signal, in other words a sync signal.

The microcomputer 118 performs overall control operations for the digital broadcast receiving apparatus 110 by executing various programs stored in the memory 115. The microcomputer 118 sets filtering requirements such as PIDs (packet ID) for the TS decoder/descrambler 120 in order to separate and extract audio and video data and EMMs from the multiplexed transmitted data. The microcomputer 118 also performs control operations for the AV decoder 114, and stores viewing records in the IC card 140. The microcomputer 118 also performs control operations for various components of the digital broadcast receiving apparatus 110 when a user operation is received via the front panel of the digital broadcast receiving apparatus 110 or the remote controller. When an EMM is detected by the EMM detection unit 112, the microcomputer 118 performs various control operations in response to the EMM.

Here, when the EMM content is key information, for example, the microcomputer 118 controls processing for producing a cipher key based on the key information, and the ID recorded in the ID card 140, and sending this to the decoder/descrambler 120. If, however, the EMM content is electronic mail sent to an individual subscriber, the microcomputer 118 controls processing to store this in the memory 115. If the content of the EMM is an instruction indicating that viewing record information should be sent to the broadcast center, the microcomputer 118 controls processing for transmitting viewing record information stored in the IC card 140 to a broadcast center via a public network 130. This is performed by controlling the operation of a modem or similar via the local I/O unit 116.

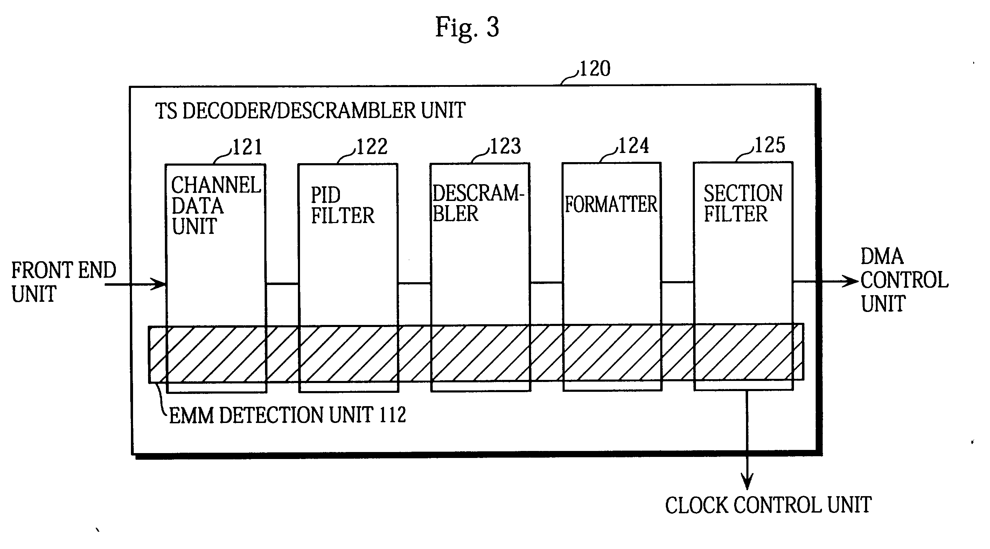

Fig. 3 is a block diagram of the TS decoder/descrambler 120, including the EMM detection unit 112.

In the drawing, the TS decoder/descrambler 120 includes a channel data unit 121, a PID filter 122, a descrambler 123, a formatter 124 and a section filter 125, and is provided with fifty-two channels for separating and extracting up to fifty-two kinds of data in parallel from an input transport stream. Four of the channels are used for separating and extracting EMMs, and these four channels are functionally represented as the EMM detection unit 112.

Here, the channel data unit 121 identifies boundaries between transport stream packets in the input transport stream and divides it into transport stream packets.

The PID filter 122 extracts transport streams with a PID set as a filtering requirement by the microcomputer 118. The microcomputer 118 obtains a transport stream containing a certain type of control table by setting a predetermined PID in the TS decoder/descrambler 120. The microcomputer 118 then obtains PIDs for video data, audio data and EMMs by referring to this control table, and can have a desired transport stream extracted by setting an obtained PID in the TS decoder/descrambler 120.

The descrambler 123 descrambles encrypted transport stream packets containing audio and video data.

The formatter 124 fetches data sections, excluding attribute information such as headers, from each transport stream packet.

The section filter 125 extracts sections, whose IDs have been set as filtering requirements by the microcomputer 118, from the sections fetched by the formatter 124.

### Data Construction

The following is an explanation of the data construction of transport stream packets processed by the EMM detection unit 112.

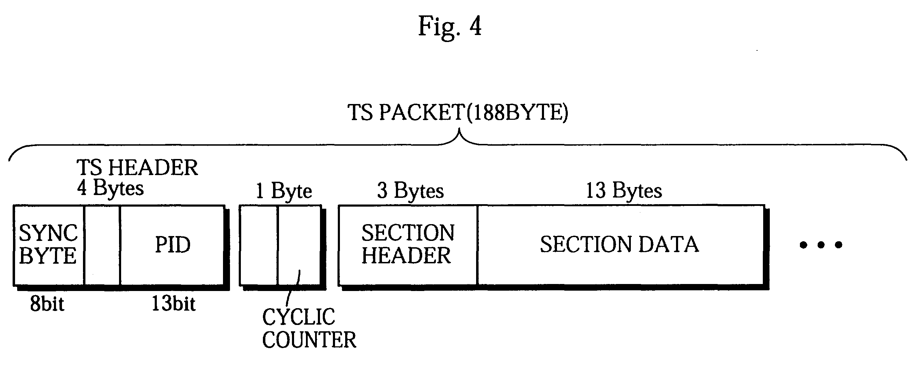

Fig. 4 shows the data construction of a transport stream packet.

The drawing shows an example transport stream packet containing EMM data. This transport stream packet includes attribute data such as a header, followed by a paired section header and section data. The section data shows the EMM content.

The section ID of an EMM is predetermined, and the EMM detection unit 112 uses the section filter 125 to detect and extract EMMs according to EMM section IDs.

### Operation

The following is an explanation of the operation of the digital broadcast receiving apparatus 110 provided in the above construction.

First, the processing executed when the digital broadcast receiving apparatus 110 is switched from viewing to standby mode following the reception of a viewing stop indication from the user is explained. The indication is a user operation, performed using the front panel or the remote controller, that signifies viewing is to be suspended. This processing is hereafter referred to as standby mode switch processing.

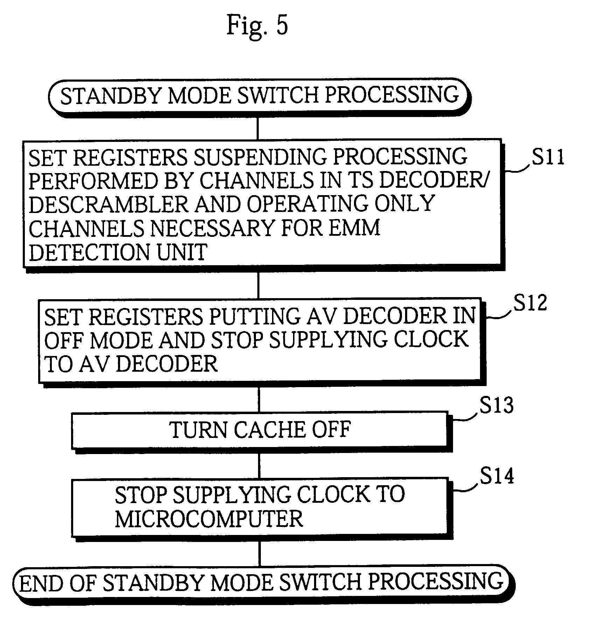

Fig. 5 is a flowchart showing standby mode switch processing.

The microcomputer 118 receives a report of a front panel key input or a remote controller operation from the clock control unit 117 and, if this is determined to be a request for standby mode switch processing, executes the standby mode switch processing as shown in the flowchart.

First, the microcomputer 118 sets a value in the registers of the TS decoder/descrambler 120, suspending the processing for all the channels of the TS decoder/descrambler 120, and then activating only the four channels needed for the EMM detection unit 112 (Step S11). As a result, only four of the fifty-two channels in the TS decoder/descrambler 120 are in operation. This means that since the EMM detection unit 112 is still in operation, EMM data can be detected and extracted from broadcast data, even in standby mode.

Next, the microcomputer 118 sets a value in the registers of the AV decoder 114, suspending its operation, and instructs the clock control unit 117 to suspend supply of a clock to the AV decoder 114. Upon receiving this indication, the clock control unit 117 suspends supply of the clock to the AV decoder 114 (Step S12). Once the AV decoder 114 ceases to receive the clock, it suspends operations.

After suspending the clock supply to the AV decoder 114, the microcomputer 118 sets its internal CPU cache in a non-operational mode, that is the OFF mode (Step S13). Then, the microcomputer 118 sends an indication requesting that its own clock supply be suspended to the clock control unit 117. Upon receiving this indication, the clock control unit 117 suspends supplying the clock to the microcomputer 118 (Step S14). Once the microcomputer 118 ceases to receive a clock, it suspends operations until the clock supply is resumed. Since the microcomputer 118 does not need to perform operations such as control of the AV decoder 114 in standby mode, the number of operations required is less than in viewing mode, and the CPU cache can be switched to the OFF mode.

When a switch to standby mode is performed, the clock control unit 117 sets the stored mode information to a value expressing standby mode.

If the microcomputer 118 has changed the setting of the CPU cache, the clock control unit 117 receives information showing the new CPU cache mode from the microcomputer 118. The clock control unit 117 supplies a clock to the CPU cache if it is in the ON mode, but not if it is in the OFF mode.

The following is an explanation of the operation of the digital broadcast receiving unit 110 when an EMM is received in standby mode.

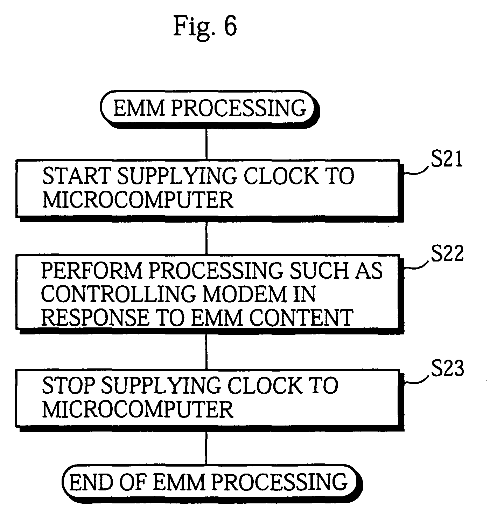

Fig. 6 is a flowchart showing the EMM processing performed by the digital broadcast receiving unit 110 when an EMM is detected by the EMM detection unit 112.

The EMM detection unit 112 notifies the clock control unit 117 when an EMM is detected. When the clock control unit 117 receives the notification during standby mode, it starts to supply a clock to the microcomputer 118 (Step S21).

Upon being supplied with the clock, the microcomputer 118 receives an EMM detection report from the clock control unit 117. It then refers to the EMM, which has been sent from the EMM detection unit 112 via the DMA control unit 113 and stored in the memory 115, and performs various control processes in response to the EMM content. One example of such a process is controlling the modem to transmit viewing record information to the broadcast center via the public network 130 (Step S22).

If the mode information held in the clock control unit 117 indicates standby mode, the microcomputer 118, upon finishing the various control processes specified by the EMM, sends an indication requesting that its own clock supply be suspended to the clock control unit 117. Upon receiving this indication, the clock control unit 117 suspends supply of the clock to the microcomputer 118 (Step S23). Once the microcomputer 118 ceases to receive the clock supply, it suspends operations until the clock supply resumes.

If the digital broadcast receiving apparatus 110 is in viewing mode rather than standby mode when an EMM is detected by the EMM detection unit 112, only the processing for Step S22 of Steps S21 to S23 is performed.

The following is an explanation of the processing executed by the digital broadcast receiving apparatus 110 to change its mode from standby mode to viewing mode in response to a viewing start indication from a user. This viewing start indication is given to the digital broadcast receiving apparatus 110 by a user operation made via the front panel of the apparatus itself or a remote controller. This processing is hereafter referred to as 'viewing mode switch processing'.

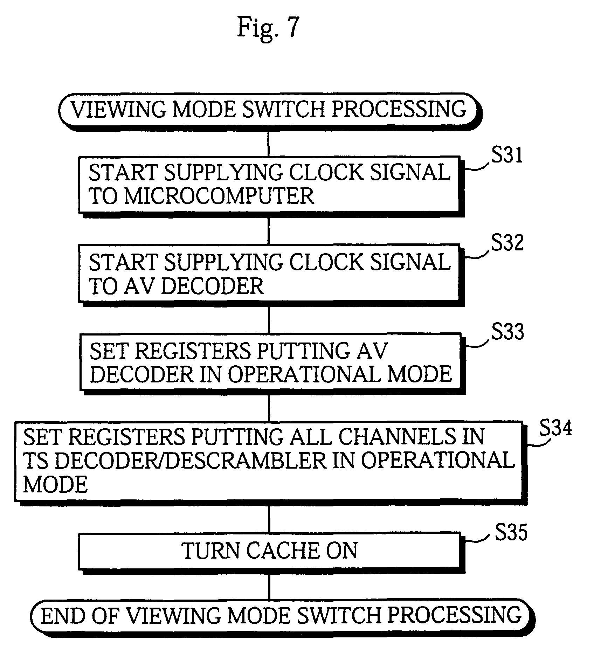

Fig. 7 is a flowchart showing viewing mode switch processing.

The clock control unit 117 receives a report of a front panel key input or a remote controller operation, and if it determines that viewing mode switch processing has been requested, executes viewing mode switch processing in the order shown in the diagram.

First, the clock control unit 117 starts to supply a clock to the microcomputer 118 and notifies the microcomputer of the switch to viewing mode (Step S31). The clock control unit 117 then starts supplying a clock to the AV decoder 114 (Step S32).

When informed that the user wishes to switch to viewing mode, the microcomputer 118 sets a value in the registers of the AV decoder 114 by executing a certain control program, putting the AV decoder 114 in an operational state (Step S33). This enables the AV decoder 114 to decode audio and video data. Next, the microcomputer 118 sets a value in the registers of the TS decoder/descrambler 120 enabling all the channels of the TS decoder/descrambler 120 to be operated (Step S34), and sets the internal CPU cache of the microcomputer 118 in operational mode, that is, in the ON mode (Step S35).

After switching to viewing mode in this way, the microcomputer 118 receives a user operation made via the front panel of the apparatus or a remote controller. The microcomputer 118 then performs the necessary operations for receiving the program requested by the user and displaying it on a monitor or similar. These operations are control of the front end unit 111 and AV decoder 114, and the setting of filtering requirements in the TS decoder/descrambler 120.

If a viewing mode switch has been performed, the clock control unit 117 changes the stored mode information to a value indicating viewing mode. This enables the digital broadcast receiving apparatus 110, when in standby mode, to reduce the number of channels used in the TS decoder/descrambler 120, put the CPU cache in the OFF mode, suspend supply of a clock to the AV decoder 114, and suspend supply of a clock to the microcomputer 118 when reception of and corresponding processing for EMMs is not being performed. As a result, power consumption in standby mode is lower than was the case when all of the above operations were performed.

### Second Embodiment

The following is an explanation of a digital broadcast communication system in the second embodiment of the invention.

### Construction

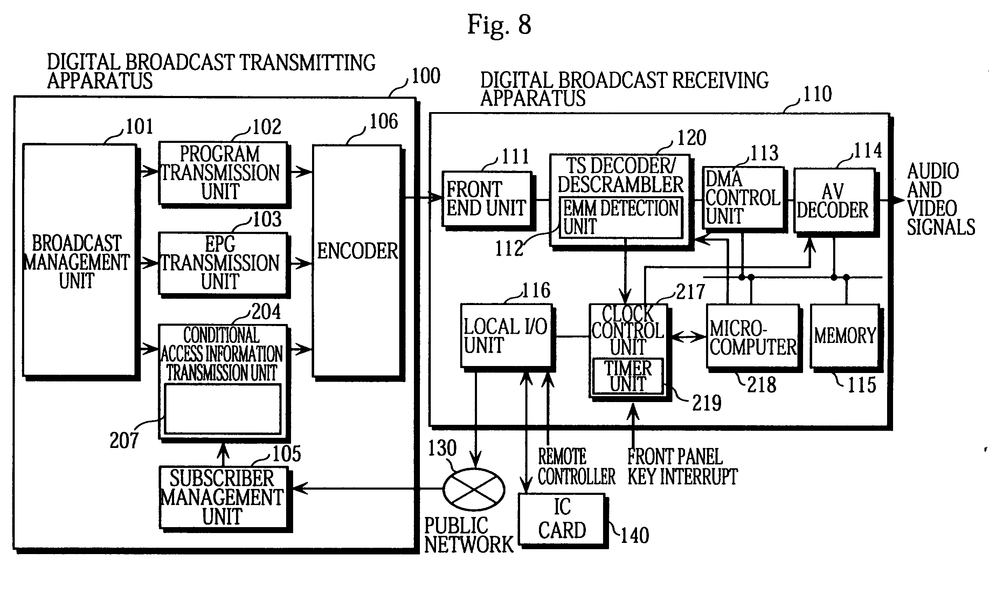

Fig. 8 is a block diagram of a digital broadcast communication system in the second embodiment. Components having the same function as in the first embodiment are given the same reference numerals.

The digital broadcast communication system shown in the diagram is formed from a digital broadcast transmitting apparatus 200 and a digital broadcast receiving apparatus 210.

Only one digital broadcast receiving apparatus is shown in the drawing, but a system typically includes a plurality of digital broadcast receiving apparatuses receiving programs and the like transmitted by the digital broadcast transmitting apparatus 200. The plurality of digital broadcast receiving apparatuses are conceptually divided into a plurality of groups determined on the basis of IDs recorded in the IC card 140 inserted in each apparatus, with each digital broadcast receiving apparatus belonging to one of the groups. Group division may be performed using a transmission target management unit 207 (described later in this specification) or similar device. In this embodiment, IDs are denoted using numbers and there are two groups, A and B. The digital broadcast receiving apparatuses with an even-numbered IC card 140 belong to group A and those with an odd-numbered IC card 140 belong to group B.

The digital broadcast transmitting apparatus 200 includes a conditional access information transmission unit 204, having the broadcast management unit 101, the program transmission unit 102, the EPG transmission unit 103, and the transmission target management unit 207, the subscriber management unit 105, and the encoder 106. The digital broadcast transmitting apparatus 200 is basically the same as the digital broadcast transmitting apparatus 100 shown in the first embodiment, differing only in the addition of the transmission management unit 207.

The transmission target management unit 207 distinguishes EMMs according to their content, and controls transmission of EMMs containing, for example, electronic mail addressed to individual subscribers, so that those to be transmitted exclusively to group A and those to be transmitted exclusively to group B are transmitted in different time periods. Transmission of EMMs containing information which must be transmitted to all of the digital broadcast receiving apparatuses, such as key information, is controlled so that such EMMs are transmitted in a different time period to the EMMs transmitted exclusively to each group. In other words the transmission target management unit 207 controls the encoder 506 so that each EMM to be transmitted is allocated to a group including the digital broadcast receiving apparatus that should process it, and EMMs in different categories are transmitted in different time periods.

The transmission target management unit 207 produces EMMs so that time information is included in each one. This information shows times at which EMMs to be handled by digital broadcast receiving apparatuses in group A and EMMs to be handled by digital broadcast receiving apparatuses in group B are to be transmitted. This means that the transmission target management unit 207 produces time information showing times at which EMMs corresponding to each of the plurality of groups are to be transmitted (hereafter referred to as 'transmission times') and includes this information in each EMM. The time information included in each EMM by the transmission target management unit 207 is information showing the transmission time of the next EMM to be transmitted to each group.

The digital broadcast receiving apparatus 210 receives digital broadcasts transmitted from the digital broadcast transmitting apparatus 200. The digital broadcast receiving apparatus 210 includes the front end unit 111, the TS decoder/descrambler 120, the EMM detection unit 112, the DMA control unit 113, the AV decoder 114, the memory 115, the local I/O unit 116, a clock control unit 217 having a timer 219, and a microcomputer 218. The apparatus is connected to the public network 130, and is equipped with the IC card 140. The digital broadcast receiving apparatus 210 is basically the same as the digital broadcast receiving apparatus 110 described in the first embodiment, differing only in the addition of the clock control unit 217, including the timer 219, and the microcomputer 218.

The front end unit 111 receives digital broadcasts via an antenna, receiving the required transport streams and forwarding them to the TS decoder/descrambler 120.

The TS decoder/descrambler 120 operates when a clock is supplied, dividing a transport stream into transport stream packets, and extracting video data, audio data and other data such as EMMs according to filtering requirements set by the microcomputer 218. As the transport stream packets containing audio and video data have been scrambled, the TS decoder/descrambler 120 descrambles them using a cipher key sent from the microcomputer 218. The TS decoder/descrambler 120 has fifty-two channels and can extract a plurality of pieces of data in parallel.

The EMM detection unit 112 corresponds to four of the channels in the TS decoder/descrambler 120, and detects and extracts EMMs.

The DMA control unit 113 forwards data extracted by the TS decoder/descrambler 120 (including the EMM detection unit 112) to the memory 115, bypassing the microcomputer 218. This enables EMMs detected by the EMM detection unit 112, for example, to be forwarded to the memory 115.

The AV decoder 114 is a processor that receives audio and video data, output from the TS decoder/descrambler 120 and stored in the memory 115, and decodes the received data, before outputting audio and video signals to an external monitor or similar. These operations are performed under the control of the microcomputer 218.

The memory 115 stores various program groups to be executed by the microcomputer 218, and audio data, video data and other data such as EMMs extracted by the TS decoder/descrambler 120.

The local I/O unit 116 is an interface with the IC card 140, or an external device such as a modem. An ID and other information is recorded on the IC card 140, and viewing of digital broadcasts is permitted when the user inserts the IC card 140 in the digital broadcast receiving apparatus 210.

Upon receiving interrupts from the local I/O unit 116, key input interrupts from the front panel, indications from the microcomputer 218 and EMM detection reports from the EMM detection unit 112, the clock control unit 217 notifies the microcomputer 218 and supplies a clock to the TS decoder/descrambler 120, the AV decoder 114 and the microcomputer 218. In other words, the clock control unit 217 controls whether a clock is supplied or not. The clock control unit 217 also holds mode information showing whether the current mode is standby or viewing mode.

The timer 219 detects when a set time has been reached. The time is set by the clock control unit 217 based on an indication from the microcomputer 218. Upon receiving a time setting indication from the microcomputer in standby mode, the clock control unit 217 suspends supply of a clock to the TS decoder/descrambler 120 (including the EMM detection unit 112), and starts to supply the clock to the TS decoder/descrambler 120 when the timer 219 detects that the set time has been reached.

The microcomputer 218 performs overall control operations of the digital broadcast receiving apparatus 210 by executing various programs stored in the memory 115. The microcomputer 218 sets filtering requirements for the TS decoder/descrambler 120 and controls the AV decoder 114 and the storage of viewing records in the IC card 140. The microcomputer 218 also controls various components in the digital broadcast receiving apparatus 210 when a user operation is received via the front panel or the remote controller. When an EMM is detected by the EMM detection unit 112, the microcomputer 218 performs various control processes in response to the EMM.

The following are examples of these control processes. When the EMM content is key information, the microcomputer 218 generates a cipher key by performing predetermined calculations based on the key information and the ID recorded in the IC card 140, and forwards the generated key to the TS decoder/descrambler 120. When the EMM content is electronic mail addressed to an individual subscriber, the microcomputer 218 stores the mail in the memory 115. When the EMM content is an instruction indicating that viewing record information should be transmitted to the broadcast center, however, the microcomputer 218 transmits viewing record information stored in the IC card 140 to the broadcast center via the public network 130, by controlling a modem or similar via the local I/O unit 116. The microcomputer 218 also uses the ID recorded in the IC card 140 to determine which group the digital broadcast receiving apparatus 210 belongs to, refers to the time information contained in the EMM to obtain a transmission time for an EMM to be handled by that group, and instructs the clock control unit 217 to set the time in the timer 219.

### Operation

The following explains the operation of the digital broadcast receiving apparatus 210 receiving digital broadcasts from the digital broadcast transmitting apparatus 200.

The digital broadcast receiving apparatus 210 performs a control operation for suspending and resuming the clock supply to the TS decoder/descrambler 120 during standby mode, in addition to the operations performed by the digital broadcast receiving apparatus 110 in the first embodiment, shown in Figs 5 to 7.

This means that the digital broadcast receiving apparatus 210 performs additional processing in Step S22 of the flowchart shown in Fig. 6. This additional processing outputs an instruction to the clock control unit 217, indicating that a transmission time for an EMM to be handled by the digital broadcast receiving apparatus 210 is to be set in the timer 219 by referring to the time information in the EMM.

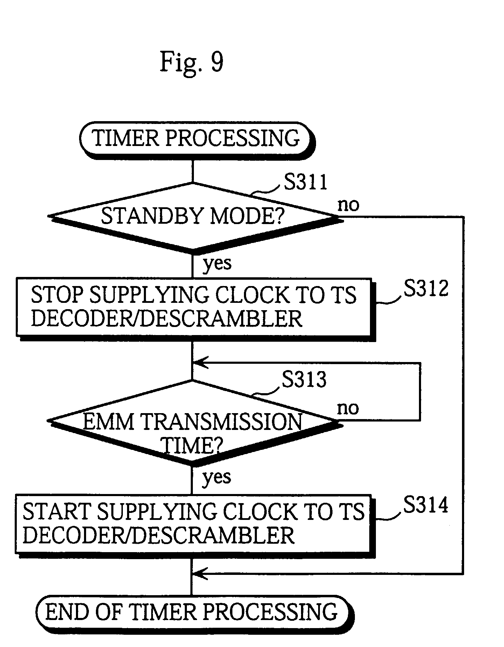

Fig. 9 is a flowchart showing timer processing executed by the clock control unit 217 when an indication for setting a time in the timer 219 is received from the microcomputer 218.

The microcomputer 218 determines which group the digital broadcast receiving apparatus 210 belongs to by referring to the ID recorded in the IC card 140 and, for example, allocating it to group A if the ID is an even number, and to group B if the ID is an odd number. If an EMM is received, the microcomputer 218 controls various processing operations in response to information, apart from time information, included in the EMM. Then, the microcomputer 218 refers to the time information included in the EMM to obtain a transmission time for an EMM to be handled by the group including the digital broadcast receiving apparatus 210, and instructs the clock control unit 217 to set this time in the timer 219.

Note that if a new EMM has already been received when the microcomputer 218 refers to the time information included in the EMM, the microcomputer 218 stops referring to the time information in the processed EMM, and performs processing corresponding to the content of the newly-received EMM, apart from the time information. The microcomputer 218 then instructs the clock control unit 217 to refer to the time information in the newly-received EMM and set the appropriate time in the timer 219.

Upon receiving an indication to set the time in the timer 219 from the microcomputer 218, the clock control unit 217 refers to the mode information to determine whether the current mode is standby mode (Step S311). If so, the clock control unit 217 suspends supply of the clock to the TS decoder/descrambler 120 (including the EMM detection unit 112) (Step S312).

After suspending the clock supply to the TS decoder/descrambler 120, the clock control unit 217 refers to the timer 219 to determine whether the set time, in other words the transmission time for an EMM to be handled by the digital broadcast receiving apparatus 210, has been reached (Step S313). If the time has been reached, the clock control unit 217 starts to supply the clock to the TS decoder/descrambler 120 (Step S314).

If the current mode at Step 311 is viewing mode rather than standby mode, the clock control unit 217 skips the processing in Steps S312 to S314. This means that the clock control unit 217 does not suspend supply of the clock to the TS decoder/descrambler 120 in viewing mode.

In standby mode, the digital broadcast receiving apparatus 210 supplies a clock to the TS decoder/descrambler 120 only from the transmission of an EMM to be handled by the digital broadcast receiving apparatus 210 until the completion of processing for that EMM. At other times, for example when EMMs are being transmitted to groups other than the group including the digital broadcast receiving apparatus 210, a clock is not supplied to the TS decoder/descrambler 120, which remains in non-operational mode. As a result, the power consumption of the digital broadcast receiving apparatus 210 in standby mode is even lower than that of the digital broadcast receiving apparatus 110 in the first embodiment.

### Supplementary Information

The digital broadcast receiving apparatus and digital broadcast transmitting apparatus of the present invention have been described based on the first and second embodiments herewith, but the present invention may be realized by other means than those described in the embodiments. For example:
(1) A cipher key for descrambling data in the digital broadcast receiving apparatus is produced in both embodiments by carrying out certain calculations, based on key information, and an ID recorded in an IC card. However, any method may be used to produce the cipher key, provided that the key is produced based on the key information contained in an EMM.
(2) The clock control unit in the digital broadcast receiving apparatus of both embodiments starts to supply a clock to the microcomputer when an EMM is detected in standby mode, and suspends supply of the clock to the microcomputer once this EMM had been processed. However, control of the microcomputer may be performed by starting and suspending the supply of electric power, rather than the clock supply. The microcomputer may also need to control peripheral devices to respond appropriately when the EMM contains an instruction for transmitting viewing record information to a broadcast center. In this case control operations may also be performed to start supplying power to peripheral devices such as a modem once the content of the EMM has been recognized by the microcomputer, and to suspend the supply of power once the corresponding processing for the EMM has been completed.
(3) The clock control unit in the digital broadcast receiving apparatus of both embodiments starts to supply a clock to the microcomputer when an EMM is detected in standby mode, and suspends supply of the clock once the microcomputer completes processing for this EMM. However, control may be performed by raising and lowering the clock frequency, rather than by starting and suspending the clock supply. In other words, the clock control unit supplies a clock to the microcomputer in the normal way, controlling the supply so that the clock frequency sent to the microcomputer from the detection of an EMM until the completion of corresponding processing for the EMM is higher than the clock frequency sent to the microcomputer from the completion of corresponding processing for the EMM until detection of a next EMM.
   This kind of clock frequency control is effective even in standby mode, if the microcomputer is controlled by a multitasking OS, and processing corresponding to user operations, and the various control processing corresponding to an EMM are each executed as separate tasks. This is due to the fact that only tasks corresponding to user operations need to be carried out between EMMs, so that the frequency can be lower than that required for EMM-related tasks without lowering the speed of response to user operations. Lowering the clock frequency reduces the power consumption of the microcomputer.
(4) The digital broadcast receiving apparatus in both embodiments receives digital broadcasts via an antenna, though such broadcasts can be made via cable.
(5) Both embodiments describe controlling a clock supply to the microcomputer which performs processing in response to an EMM However, an EMM is just one example of a control message multiplexed with program data such as audio and video data. Provided that the control message is multiplexed together with program data such as audio and video data, it may have any data structure. Furthermore, the content of the control message may be, for example, time information for adjusting a clock in the digital broadcast receiving apparatus to the correct time, information required for displaying an Electronic Program Guide (EPG) and control indication information for forcibly switching the digital broadcast receiving apparatus to a specified channel when an emergency such as a natural disaster occurs, so that an emergency program broadcast on the specified channel is viewed. Note that even if the digital broadcast receiving apparatus is in standby mode when a control message containing control indication information for such an emergency is received, control for switching to view the emergency program broadcast on the specified channel may be performed following the execution of viewing mode switch processing.
(6) In the second embodiment, the group to which a digital broadcast receiving apparatus belongs is determined based on an ID recorded in an IC card inserted in the digital broadcast receiving apparatus, and depends, for example, on whether the ID is an odd or even number. However, the method used to divide the digital broadcast receiving apparatuses into groups need not be limited to this one, and may take place on an area basis, so that the apparatuses are divided into area A, area B, area C and so on. When groups are formed on an area basis, the EMMs to be transmitted are split up according to area, and the digital broadcast receiving apparatus recognizes the area to which a digital broadcast receiving apparatus belongs by having the user input a location, for example, and then judges which EMMs should be received.
(7) Time information is included in each EMM in the second embodiment, but this is not necessary. Instead, the digital broadcast transmitting apparatus may periodically transmit EMMs including the transmission schedule for a plurality of EMMs. For example, an EMM containing information showing that EMMs for group A are to transmitted at between 0 and 200 ms and between 500 ms and 700 ms past each second, and that EMMs for group B are to be transmitted at between 200 ms and 400 ms and between 700 ms and 900 ms past each second may be periodically transmitted to the digital broadcast receiving apparatus. The digital broadcast receiving apparatus may also specify transmission times for EMMs to be handled by a certain digital broadcast receiving apparatus, based on an ID or similar recorded in the IC card. However, if EMM transmission times are specified, the digital broadcast receiving apparatus needs to supply a clock to the TS decoder/descrambler at times corresponding to these transmission times when in standby mode, by setting a transmission time for a relevant EMM in the timer.
(8) The clock control unit in the second embodiment starts to supply a clock to the microcomputer when an EMM is detected. Alternatively, the clock supply to the microcomputer may start when the time set in the timer is reached.
   Although the present invention has been fully described by way of examples with reference to accompanying drawings, it is to be noted that various changes and modifications will be apparent to those skilled in the art. Therefore, unless such changes and modifications depart from the scope of the present invention, they should be construed as being included therein.

## Claims

1. A digital broadcast receiving apparatus receiving broadcast data produced by multiplexing broadcast program data and control messages, the digital broadcast receiving apparatus comprising:
a receiving means for receiving the broadcast data;
a control message detecting means for detecting a control message included in the data received by the receiving means;
a control message processing means, being set in one of a first mode and a second mode, the second mode having a higher processing capability than the first mode, for performing control processing relating to the control message when in the second mode; and
a mode controlling means for setting the control message processing means in the second mode once the control message is detected by the control message detecting means.

2. The digital broadcast receiving apparatus of Claim 1, wherein:
the first mode is a mode in which a clock signal is not supplied;
the second mode is a mode in which the clock signal is supplied; and
the mode controlling means starts supplying the clock signal to the control message processing means when the control message is detected by the control message detecting means.

3. The digital broadcast receiving apparatus of Claim 2, wherein the mode controlling means suspends supply of the clock signal to the control message processing means once the control message processing means has completed execution of control processing relating to the control message.

4. The digital broadcast receiving apparatus of Claim 3, wherein the program data includes compressed audio and video data, and the digital broadcast receiving apparatus further comprises:
an audio-video extracting means for extracting audio and video data from the data received by the receiving means;
an audio-video decompressing means for decompressing the extracted audio and video data only when supplied with a clock signal; and
a viewing stop indication receiving means receiving a viewing stop indication via a user operation,
wherein the mode controlling means further suspends supply of a clock signal to the audio-video decompressing means and the control message processing means once a viewing stop indication has been received by the viewing stop indication receiving means.

5. The digital broadcast receiving apparatus of Claim 4, further comprising:
a viewing start indication receiving means for receiving a viewing start indication via a user operation,
wherein the suspension of the clock signal by the mode controlling means once control processing has been completed by the control message processing means is limited to a period from when a viewing stop indication is received by the viewing stop indication receiving means until a viewing start indication is received by the viewing start indication receiving means, and
the mode controlling means supplies a clock signal to the audio-visual decompressing means and the control message processing means from where a viewing start indication is received by the viewing start indication means until a viewing stop indication is received by the viewing stop indication means.

6. The digital broadcast receiving apparatus of Claim 5, comprising a memory storing control programs for realizing control processing relating to the control message,
wherein the control message processing means is a microcomputer executing the control programs.

7. The digital broadcast receiving apparatus of Claim 6, comprising:
a TS (transport stream) decoding means having (1) at least one channel used by the control message detecting means for detecting control messages and (2) a plurality of channels used by the audio-video extracting means for extracting audio and video data, each channel extracting one type of data complying with a predetermined requirement from the data received by the receiving means; and
a channel controlling means for controlling use of the channels used by the audio-video extracting means so that:
use is prevented once a viewing stop indication has been received by the viewing stop indication receiving means; and
use is possible once a viewing start indication has been received by the viewing start indication receiving means.

8. The digital broadcast receiving apparatus of Claim 6, wherein:
the microcomputer includes a CPU cache; and
the mode controlling means:
(1) sets the CPU cache in OFF mode and does not supply a clock signal to the CPU cache, when a viewing stop indication is received by the viewing stop indication receiving means, and
(2) sets the CPU cache in ON mode and starts supplying the clock signal to the CPU cache, when a viewing start indication is received by the viewing start indication receiving means.

9. The digital broadcast receiving apparatus of Claim 6, wherein:
the audio and video data are broadcast as scrambled data;
control messages include key information forming a basis for calculating a cipher key used for descrambling the scrambled audio and video data;
the control programs include control processing to be executed by the microcomputer, the control processing calculating the cipher key based on the key information and supplying the cipher key to the audio-video extracting means; and
the audio-video extracting means uses the cipher key to descramble the scrambled audio and video data when extracting the audio and video data.

10. The digital broadcast receiving apparatus of claim 6, wherein the control message detecting means detects control messages only when supplied with a clock signal; and
the mode controlling means starts supplying the clock signal to the control message detecting means if a specified time has been reached, and suspends supply the clock signal to the control message detecting means once control processing relating to a control message has been completed by the control message processing means.

11. The digital broadcast receiving apparatus of Claim 3, comprising a memory storing control programs for realizing control processing relating to the control message,
wherein the control message processing means is a microcomputer executing the control programs.

12. The digital broadcast receiving apparatus of Claim 11, comprising:
an audio-video extracting means for extracting audio and video data from the data received by the receiving means;
an audio-video decompressing means for decompressing audio and video data extracted by the audio-video extracting means;
a viewing stop indication receiving means for receiving a viewing stop indication via a user operation;
a viewing start indication receiving means for receiving a viewing start indication via a user operation;
a TS decoding means having (1) at least one channel used by the control message detecting means for detecting control messages and (2) a plurality of channels used by the audio-video extracting means for extracting audio and video data, each channel extracting one type of data complying with a predetermined requirement from the data received by the receiving means; and
a channel controlling means for controlling use of the channels used by the audio-video extracting means so that:
use is prevented once a viewing stop indication has been received by the viewing stop indication receiving means; and
use is possible once a viewing start indication has been received by the viewing start indication receiving means.

13. The digital broadcast receiving apparatus of Claim 11, comprising:
an audio-video extracting means for extracting audio and video data from the data received by the receiving means;
an audio-video decompressing means for decompressing audio and video data extracted by the audio-video extracting means,
wherein the audio and video data are broadcast as scrambled data;
control messages includes key information forming a basis for calculating a cipher key used for descrambling the scrambled audio and video data;
the control programs include control processing to be executed by the microcomputer, the control processing calculating the cipher key based on the key information and supplying the cipher key to the audio-video extracting means; and
the audio-video extracting means uses the cipher key to descramble the scrambled audio and video data when extracting the audio and video data.

14. The digital broadcast receiving apparatus of Claim 11, wherein the control message detecting means detects control messages only when supplied with a clock signal; and
the mode controlling means starts supplying the clock signal to the control message detecting means if a specified time has been reached, and suspends supply of the clock signal to the control message detecting means once control processing relating to a control message has been completed by the control message processing means.

15. The digital broadcast receiving apparatus of Claim 14, wherein the specified time is a transmission time for a control message to be handled by the digital broadcast receiving apparatus, and differs from a transmission time for a control message to be handled by at least one other digital broadcast receiving apparatus.

16. The digital broadcast receiving apparatus of Claim 15, comprising:
an IC (integrated circuit) card reading means for reading identification information recorded on an IC card,
wherein the mode controlling means decides the specified time in response to the identification information recorded on the IC card.

17. The digital broadcast receiving apparatus of Claim 16, wherein the data received by the receiving means further includes time information relating to the specified time, and
the mode controlling means decides the specified time according to the time information and the identification information.

18. The digital broadcast receiving apparatus of Claim 2, comprising a memory storing control programs for realizing control processing relating to the control message,
wherein the control message processing means is a microcomputer executing the control programs.

19. The digital broadcast receiving apparatus of Claim 18, wherein the control message detecting means detects control messages only when supplied with a clock signal; and
the mode controlling means starts to supply the clock signal to the control message detecting means if a specified time has been reached, and suspends supply of the clock signal to the control message detecting means once control processing relating to a control message has been completed by the control message processing means.

20. The digital broadcast receiving apparatus of Claim 2, comprising:
an audio-video extracting means for extracting audio and video data from the data received by the receiving means;
an audio-video decompressing means for decompressing audio and video data extracted by the audio-video extracting means,
wherein the audio and video data is broadcast as scrambled data,
control messages include key information forming a basis for calculating a cipher key used for descrambling the scrambled audio and video data;
the control programs include control processing to be executed by the microcomputer, the control processing calculating the cipher key based on the key information and supplying the cipher key to the audio-video extracting means; and
the audio-video extracting means uses the cipher key to descramble the scrambled audio and video data when extracting the audio and video data.

21. The digital broadcast receiving apparatus of Claim 1, wherein the first mode is a mode in which electric power is not supplied;
the second mode is a mode in which electric power is supplied; and
the mode controlling means starts supplying electric power to the control message processing means when a control message is detected by the control message detecting means.

22. The digital broadcast receiving apparatus of Claim 21, comprising a memory storing control programs for realizing control processing relating to the control message,
wherein the control message processing means is a microcomputer executing the control programs.

23. The digital broadcast receiving apparatus of Claim 22, wherein the mode controlling means suspends supply of electric power to the control message processing means once the control message processing means has completed control processing relating to the control message.

24. The digital broadcast receiving apparatus of Claim 1, wherein the digital broadcast receiving apparatus can be connected to peripheral devices;
control messages are information controlling a peripheral device;
the first mode is a mode in which a clock signal is not received;
the second mode is a mode in which the clock signal is received;
the control message processing means perform control processing of the peripheral device in response to a control message when in the second mode; and
the mode controlling means starts supplying the clock signal to the control message processing means and electric power to the peripheral device, when the control message has been detected by the control message detecting means, and suspends supply of the clock signal to the control message processing means and electric power to the peripheral device, once control processing relating to the control message has been completed by the control message processing means.

25. The digital broadcast receiving apparatus of Claim 1, further comprising:
a memory storing control programs executed by a microcomputer using a multitasking function so that processing for control programs relating to control messages is treated as a separate task from other types of processing,
wherein the first mode is a mode in which the clock signal is supplied at a first frequency,
the second mode is a mode in which the clock signal is supplied at a second frequency higher than the first frequency,
the control message processing means is the microcomputer executing the control programs, and
the mode controlling means supplies a clock signal to the microcomputer at the second frequency once a control message is detected by the control message detecting means, and supplies a clock signal to the microcomputer at the first frequency once control processing relating to the control message has been completed by the microcomputer.

26. The digital broadcast receiving apparatus of Claim 25, the program data includes compressed video and audio data, and the digital broadcast receiving apparatus further comprises:
an audio-video extracting means for extracting audio and video data from the data received by the receiving means;
an audio-video decompressing means for decompressing the extracted audio and video data only when supplied with a clock signal;
a viewing stop indication receiving means receiving a viewing stop indication via a user operation,
wherein, once the viewing stop indication has been received by the viewing stop indication receiving means, the mode controlling means suspends supply of the clock signal to the audio-video decompressing means and supplies a clock signal to the microcomputer at the first frequency.

27. The digital broadcast receiving apparatus of Claim 26, further comprising:
a viewing start indication receiving means for receiving a viewing start indication via a user operation,
wherein, once a viewing start indication is received by the viewing start indication receiving means, the mode controlling means starts supplying the clock signal to the audio-video decompressing means, and supplies a clock signal to the microcomputer at the second frequency.

28. The digital broadcast receiving apparatus of Claim 1, wherein the mode controlling means sets the control message processing means in the first mode once control processing relating to the control message has been completed by the control message processing means.

29. A digital broadcast transmitting apparatus transmitting data including control messages, using a digital broadcast format, to a plurality of digital broadcast receiving apparatuses divided into a plurality of groups, the digital broadcast transmitting apparatus comprising:
a control message allocating means for allocating each of a plurality of control messages to one of the plurality of groups, the group including digital broadcast receiving apparatuses that should control processing relating to the control message;
a control message transmitting means for transmitting, at different times, control messages allocated to different groups by the control message allocating means; and
a time information transmitting means for transmitting time information showing times at which the control message transmitting means will transmit control messages for each group, the time information being transmitted prior to transmission of the control messages.
